Europäisches Patentamt

European Patent Office

Office européen des brevets

(19)

(11) **EP 1 335 299 A1**

(12) **EUROPEAN PATENT APPLICATION**
published in accordance with Art. 158(3) EPC

(43) Date of publication:
 **13.08.2003 Bulletin 2003/33**

(51) Int Cl.⁷: **G06F 17/16**, G06T 15/00, G06T 1/20

(21) Application number: **01980956.5**

(22) Date of filing: **02.11.2001**

(86) International application number:
 **PCT/JP01/09616**

(87) International publication number:
 **WO 02/037317 (10.05.2002 Gazette 2002/19)**

(84) Designated Contracting States:
 **BE CH DE DK ES FI FR GB IT LI NL SE**

(30) Priority: **02.11.2000 JP 2000335787
 16.10.2001 JP 2001318590**

(71) Applicant: **Sony Computer Entertainment Inc.
 Tokyo 107-0052 (JP)**

(72) Inventor: **MAGOSHI, Hidetaka,
 SONY COMPUTER ENTERTAINMENT INC
 Minato-ku, Tokyo 107-0052 (JP)**

(74) Representative: **Görz, Ingo
 Müller Hoffmann & Partner,
 Patentanwälte,
 Innere Wiener Strasse 17
 81667 München (DE)**

(54) **PARALLEL OPERATION DEVICE, ENTERTAINMENT DEVICE, OPERATING METHOD, COMPUTER PROGRAM, AND SEMICONDUCTOR DEVICE**

(57)    The present invention provides a parallel arithmetic apparatus capable of easily performing vector inner product operations as well as efficient matrix operations. A parallel arithmetic apparatus (100a) is provided with pairs of registers (120a to 120d) that record arithmetical elements to be operated and FMACs (140a to 140d) that perform sum-of-products operations based on the arithmetical elements recorded in these registers (120a to 120d). Selectors (130a, 130b) are inserted between the register (120a) and the FMAC (140a). The selectors (130a, 130b) supply the arithmetical element recorded in the register (120a) to the FMAC (140a) during a matrix operation, select the registers (120a to d) one by one in a round-robin fashion and supply the arithmetical element recorded in the selected register to the FMAC (140a) during a vector inner product operation.

FIG.2

EP 1 335 299 A1

**EP 1 335 299 A1**

**Description**

Technical Field

The present invention relates to a technology for carrying out parallel processing that uses a plurality of arithmetic unitsand, more particularly, to a parallel arithmetic processing technology for carrying out processing such as geometry processing on computer graphics at high speed.

Background Art

Some objects to be displayed with three-dimensional computer graphics may be modeled as a set of a plurality of basic graphics (polygons). The vertices of a polygon are expressed by four-dimensional coordinates (x, y, z, w) using homogeneous coordinates. The coordinates of the polygon vertices are subjected to coordinate transformation according to points of view coordinates and subjected to perspective transformation, etc. according to distances. That is, transformation is made in such a way that farther objects appear smaller. This series of processing is called "geometry processing".

There are various modes of geometry processing. For example, a matrix operation that uses a $4 \times 4$ transformation matrix is performed for rotation, expansion, contraction, perspective projection and parallel translation of a polygon. An inner product operation is carried out to determine, for example, brightness on a light-receptive surface. The matrix and inner product operations require repetitions of sum-of-products operations.

In three-dimensional computer graphics, a processing method that uses floating-points that are conventionally used for high end systems is used also in the field of entertainment apparatuses for generating entertainment images such as video game images and the field with severe constraints on costs such as the field of portable information terminals. This is because processing methods that use the floating-points increase the data dynamic range and facilitate programming, and are therefore suited to sophisticated processing.

For the purpose of carrying out a matrix operation on floating-point numbers to be used for processing that uses the floating-points, a parallel arithmetic apparatus is available which incorporates a plurality of floating-point sum-of-products operators (FMACs: Floating Multiply Accumulators) and carries out matrix operations efficiently. The plurality of FMACs allows parallel arithmetic operations increasing the processing speed.

Some apparatuses, such as entertainment apparatuses and personal computers, that carry out three-dimensional image processing can obtain fine and realistic three-dimensional images at high speed by means of carrying out the aforementioned geometry processing using such a parallel arithmetic apparatus.

For a parallel arithmetic apparatus with, for example, four FMACs placed in parallel, the parallel arithmetic apparatus can easily perform matrix operations using a $4 \times 4$ transformation matrix as shown in the mathematical expression 1. However, it is difficult to perform an inner product operation between a vector A (Ax, Ay, Az, Aw) and a vector B (Bx, By, Bz, Bw) as shown in the mathematical expression 2.

This is because the coordinates X, Y, Z and W that are subjected to processing are independently operated in a one-to-one correspondence with four FMACs.

This is explained more specifically.

When a matrix operation in the mathematical expression 1 is carried out, component values corresponding to a single row of the transformation matrix and coordinate values of the coordinates to be transformed are fed into each of four FMACs as arithmetical elements to be operated. The component values of the transformation matrix and the coordinate values of the coordinates entered are subjected to a sum-of-products operation to perform a matrix operation. For example, component values (M11, M12, M13, M14) on the first row of the transformation matrix and coordinate values of the coordinates (Vx, Vy, Vz, Vw) are subjected to a sum-of-products operation to calculate "M11•Vx + M12•Vy + M13•Vz + M14•Vw". Since each of the four FMACs carries out a similar sum-of-products operation, matrix operations are completed efficiently. In this Specification, "•" denotes multiplication.

When an inner product operation in the mathematical expression 2 is carried out, each of the four FMACs is associated with one of the component values of the components X, Y, Z and W. Therefore, Ax and Bx, Ay and By, Az and Bz, and Aw and Bw are supplied to the four FMACs, respectively. Ax•Bx, Ay•By, Az•Bz and Aw•Bw are calculated as their respective outputs. Thus, execution of the mathematical expression 2 requires a separate adder for adding up the outputs of the four FMACs, which increased the scale of the circuit.

As apparent from the above, the conventional parallel arithmetic apparatus can provide efficient processing of matrix operations. However, the FMACs provided in parallel alone cannot perform vector inner product operations and sometimes require an additional adder.

(MATHEMATICAL EXPRESSION 1)

$$\begin{bmatrix} M_{11} & M_{12} & M_{13} & M_{14} \\ M_{21} & M_{22} & M_{23} & M_{24} \\ M_{31} & M_{32} & M_{33} & M_{34} \\ M_{41} & M_{42} & M_{43} & M_{44} \end{bmatrix} \begin{pmatrix} V_x \\ V_y \\ V_z \\ V_w \end{pmatrix} = \begin{pmatrix} M_{11} \cdot V_x + M_{12} \cdot V_y + M_{13} \cdot V_z + M_{14} \cdot V_w \\ M_{21} \cdot V_x + M_{22} \cdot V_y + M_{23} \cdot V_z + M_{24} \cdot V_w \\ M_{31} \cdot V_x + M_{32} \cdot V_y + M_{33} \cdot V_z + M_{34} \cdot V_w \\ M_{41} \cdot V_x + M_{42} \cdot V_y + M_{43} \cdot V_z + M_{44} \cdot V_w \end{pmatrix}$$

(MATHEMATICAL EXPRESSION 2)

$$(Ax, Ay, Az, Aw) \bullet (Bx, By, Bz, Bw)$$

$$= Ax \bullet Bx + Ay \bullet By + Az \bullet Bz + Aw \bullet Bw$$

Disclosure of Invention

It is a main object of the present invention to provide a parallel arithmetic apparatus capable of carrying out vector inner product operations easily while carrying out matrix operations as efficiently as conventional parallel arithmetic apparatuses.

A parallel arithmetic apparatus according to the present invention that solves the above-mentioned problems comprises multiple pairs of recording means for recording arithmetical elements to be operated and operating means for performing sum-of-products operations based on the arithmetical elements recorded in the recording means, wherein one of said recording means of all pairs is selected and selecting means for supplying the arithmetical elements recorded in the selected recording means to the operating means of the pair is inserted between the recording means and operating means of any one pair.

The parallel arithmetic apparatus of the present invention can, when the selecting means selects recording means of the pair in which the selecting means itself is inserted, perform operations using arithmetical elements independent of each other in each pair. That is, it is possible to carry out the matrix operations similar to those in the conventional art.

On the other hand, when the selecting means selects one recording means after another from among all the recording means in a round-robin fashion, it is possible to perform operations using the arithmetical elements recorded in the recording means of each pair. That is, the parallel arithmetic apparatus of the present invention can perform inner product operations easily without the need to use other circuits such as adders.

This parallel arithmetic apparatus can also insert temporary recording means for temporarily recording the arithmetical elements recorded in the recording means of a pair in which the selecting means is not inserted is inserted between the recording means and operating means of the pair. In this case, the selecting means is constructed in such a way as to supply the arithmetical elements recorded in the temporary recording means to the operating means when the recording means of the pair in which the selecting means is not inserted is selected.

Inserting the temporary recording means eliminates the need to occupy the output ports of the recording means when arithmetical elements are taken in from the recording means. This allows the recording means and operating means of the pair in which the temporary recording means is inserted to perform other processing.

In the parallel arithmetic apparatus, the recording means of all pairs record, during a matrix operation, a first arithmetical element to be subjected to the matrix operation, and during a vector inner product operation, a second arithmetical element to be subjected to the vector inner product operation, the selecting means is constructed in such a way as to input the first arithmetical element from the recording means of the own pair to the operating means of the own pair, and during the inner product operation, in such a way as to select the recording means of all the pairs one by one in a round-robin fashion and supply the second arithmetical element from the selected recording means to the operating means of the own pair.

Each of the operating means performs operations with a content independently assigned to the pair using the operating elements recorded in the recording means of the pair and when this parallel arithmetic apparatus is used for three-dimensional computer graphics, such an operation is associated with any one of components of four-dimensional coordinates.

Another embodiment of the present invention is a parallel arithmetic apparatus that selectively performs a matrix operation and vector inner product Operation, comprising a plurality of recording means for recording, during the matrix operation, a first arithmetical element to be subjected to the matrix operation and recording, during the inner product operation, a second arithmetical element to be subjected to the inner product operation, a plurality of operating means forming a one-to-one correspondence with the plurality of recording means for performing, during the matrix operation, a sum-of-products operation by each operating means receiving the first arithmetical element recorded in the corresponding recording means and performing, during the inner product operation, a sum-of-products operation by predetermined one of the operating means receiving the second arithmetical element recorded in all the recording means and selecting means for selecting, during the matrix operation, the recording means corresponding to the predetermined operating means and supplying a first arithmetical element recorded in this recording means to the predetermined operating means, and selecting, during the inner product operation, the plurality of recording means one by one in a round-robin fashion and supplying a second arithmetical element recorded in the selected recording means to the predetermined operating means.

In such a parallel arithmetic apparatus, the operating means is constructed so as to carry out a sum-of-products operation on the floating-point numbers when, for example, the arithmetical elements are expressed with floating-point numbers.

The entertainment apparatus according to the present invention is an entertainment apparatus that performs image processing on an entertainment image by performing a matrix operation with regard to coordinates expressing a position and a shape of an object and performing an inner product operation with regard to vectors used to express an image of the object, comprising a plurality of registers that records, during the matrix operation, a first arithmetical element subjected to the matrix operation and records, during the inner product operation, a second arithmetical element subjected to the inner product operation, a plurality of sum-of-products operators forming a one-to-one correspondence with the plurality of registers that performs, during the matrix operation, a sum-of-products operation by each sum-of-products operator receiving the first arithmetical element recorded in the corresponding registers, and performs, during the inner product operation, a sum-of-products operation by predetermined one of the sum-of-products operators receiving the second arithmetical element recorded in all registers and a selector that selects, during the matrix operation, a register corresponding to the predetermined sum-of-products operator and supplies a first arithmetical element recorded in this register to the predetermined sum-of-products operator, and selects, during the inner product operation, the plurality of registers one by one in a round-robin fashion and supplies a second arithmetical element recorded in the selected register to the predetermined sum-of-products operator.

Another entertainment apparatus of the present invention is an entertainment apparatus that performs image processing on an entertainment image by carrying out a matrix operation between a matrix and coordinate values to perform a coordinate transformation of coordinates expressing the position and a shape of an object and carrying out an inner product operation between a normal vector oriented in the normal direction of the surface of the object and position vector of a light source to determine the display mode of the surface of the object, comprising a plurality of registers that records the coordinate values and component values corresponding to any one row of the matrix during the matrix operation and records the normal vector and component values corresponding to any one component of the position vector during the inner product operation, a sum-of-products operators forming a one-to-one correspondence with the plurality of registers that carries out a sum-of-products operation during the matrix operation by each sum-of-products receiving the coordinate values recorded in the corresponding register and component values corresponding to the one row of the matrix, and carry out a sum-of-products operation during the inner product operation by predetermined one of the sum-of-products operators receiving the normal vector recorded in all registers and component values of the position vector, a selector that selects, during the matrix operation, a register corresponding to the predetermined sum-of products operator and supplies the coordinate value recorded in this register and component values corresponding to the one row of the matrix to the predetermined sum-of-products operator, and selects, during the inner product operation, the plurality of registers one by one in a round-robin fashion and supplies component values of the normal vector and the position vector recorded in the selected register in the predetermined sum-of-products operator.

The processing method according to the present invention is a processing method that allows a matrix operation and vector inner product operation to be selectively executed and is executed by an apparatus provided with a plurality of operating means, comprising the steps of supplying, during the matrix operation, arithmetical elements subjected to the matrix operation by assigning the arithmetical elements to the plurality of operating means based on the features thereof to carry out a sum-of-products operation based on the assigned arithmetical elements and supplying, during the inner product operation, arithmetical elements subjected to the inner product operation in one predetermined operating means to allow the operating means to carry out a sum-of-products operation based on the arithmetical elements.

The computer program according to the present invention is a computer program that makes it possible to selectively execute a matrix operation and vector inner product operation and renders a computer provided with a plurality of operating means to execute a step of supplying, during the matrix operation, arithmetical elements subjected to the matrix operation by assigning the arithmetical elements to the plurality of operating means based on the features thereof to carry out a sum-of-products operation based on the assigned arithmetical elements and supplying, during the inner product operation, arithmetical elements subjected to the inner product operation in one predetermined operating means to allow the operating means to carry out a sum-of-products operation based on the arithmetical elements.

The semiconductor device according to the present invention is a semiconductor device that makes it possible to selectively execute a matrix operation and vector inner product operation and is built in an apparatus incorporating a computer provided with a plurality of operating means, rendering the apparatus to execute a step of supplying, during the matrix operation, arithmetical elements subjected to the matrix operation by assigning the arithmetical elements to the plurality of operating means based on the features thereof to allow each operating means to carry out a sum-of-products operation based on the assigned arithmetical elements and supplying, during the inner product operation, arithmetical elements subjected to the inner product operation in one predetermined operating means to allow the operating means to carry out a sum-of-products operation based on the arithmetical elements.

Brief Description of Drawings

FIG. 1 is a block diagram of an entertainment apparatus;
FIG. 2 is a block diagram of a parallel arithmetic apparatus;
FIG. 3 is an internal block diagram of an FMAC;
FIG. 4 is a flow chart showing a procedure for inner product operation processing; and
FIG. 5 is a block diagram of a parallel arithmetic apparatus.

Best Mode for Carrying Out the Invention

Embodiments of the present invention are specifically described with reference to the drawings accompanying herewith.

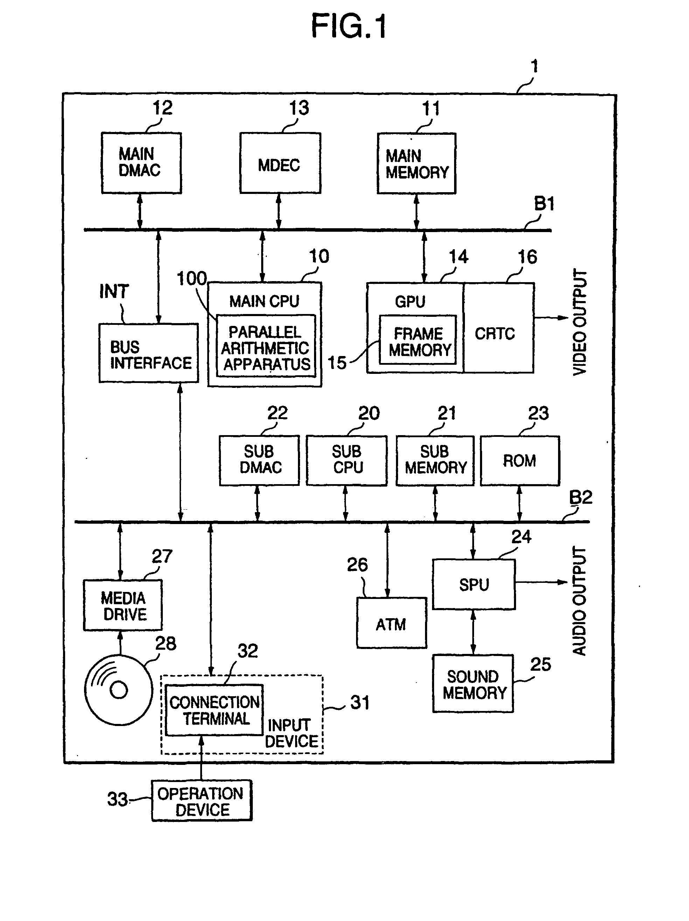

FIG. 1 is a view illustrating a configuration example of an entertainment apparatus including a parallel arithmetic apparatus according to the present invention.

This entertainment apparatus 1 comprises two buses, a main bus B1 and a sub bus B2, to which a plurality of semiconductor devices each having a specific function are connected. These buses B1 and B2 are connected to or disconnected from each other through a bus interface INT.

The main bus B1 is connected to a main CPU 10 which is a main semiconductor device, a main memory 11 that is made up of a RAM, a main DMAC (Direct Memory Access Controller) 12, an MPEG (Moving Picture Experts Group) decoder (MDEC) 13 and a graphic processing unit (hereinafter referred to as "GPU") 14 having a built-in frame memory 15 which serves as a drawing memory. The GPU 14 is connected to a CRTC (CRT Controller) 16 for generating a video output signal so that the data drawn in the frame memory 15 can be displayed on a display apparatus which is not shown.

The main CPU 10 loads a bootstrap program from the ROM 23 on the sub bus B2 through the bus interface INT upon activation of the entertainment apparatus 1, and executes the bootstrap program to start an operating system. It controls the media drive 27, reads an application program or data from the medium 28 mounted in this media drive 27, and stores this in the main memory 11. It performs the above-described geometry processing for various data read from the medium 28, such as three-dimensional object data (coordinate values of the vertices (representative points) of polygons) made up of a plurality of basic graphics (the polygons). Then, it generates a display list containing as its contents polygon definition information (specifications of a shape of the polygon used, its drawing position, type, color or texture of components of the polygon), as a result of the geometry processing.

A parallel arithmetic apparatus 100 is included in the main CPU 10 and is used for the geometry processing, etc. Details of the parallel arithmetic apparatus 100 will be described later.

The GPU 14 is a semiconductor device having the functions of storing drawing context (drawing data including polygon components), carrying out rendering processing (drawing processing) by reading drawing context according to the display list notified from the main CPU 10 and drawing polygons in the frame memory 15. The frame memory 15 can also be used as a texture memory. Thus, a pixel image in the frame memory 15 can be pasted as texture to a polygon to be drawn.

The main DMAC 12 is a semiconductor device that controls not only DMA transfer to each circuit connected to the main bus B1, but also DMA transfer to each circuit connected to the sub bus B2 according to the state of the bus interface INT. The MDEC 13 is a semiconductor device that operates in parallel with the main CPU 10 and has the function of decompressing data compressed, for example, in the MPEG (Moving Picture Experts Group) or JPEG (Joint Photographic Experts Group) format.

The sub bus B2 is connected to a sub CPU 20 including a microprocessor, a sub memory 21 made up of a RAM, a sub DMAC 22, a ROM 23 on which a control program such as an operating system is stored, a sound processing semiconductor device (SPU: Sound Processing Unit) 24 that reads sound data stored in the sound memory 25 and produces them as an audio output, a communication control section (ATM) 26 that exchanges information with an external apparatus via a network which is not shown, a media drive 27 in which a medium 28, such as a CD-ROM and a DVD-ROM, can be loaded, and an input device 31.

The sub CPU 20 carries out various operations according to the control program stored in the ROM 23. The sub DMAC 22 is a semiconductor device that controls operations such as DMA transfer to each circuit connected to the sub bus B2 only when the bus interface INT disconnects the main bus B1 from sub bus B2. The input device 31 is provided with a connection terminal 32 through which an input signal from an operating device 33 is supplied.

The entertainment apparatus 1 with such a configuration can carry out matrix operations and inner product operations at high speed that are performed during the geometry processing through the parallel arithmetic apparatus 100 included in the main CPU 10, which will be described below.

The parallel arithmetic apparatus 100 executes at high speed a matrix operation between a transformation matrix and vertex coordinate values that are performed when the coordinates of polygon vertices are transformed and an inner product operation between a normal vector oriented in the normal direction of the surface and a position vector of a light source carried out when a display condition such as brightness of the surface of an object is determined.

<Embodiment 1>

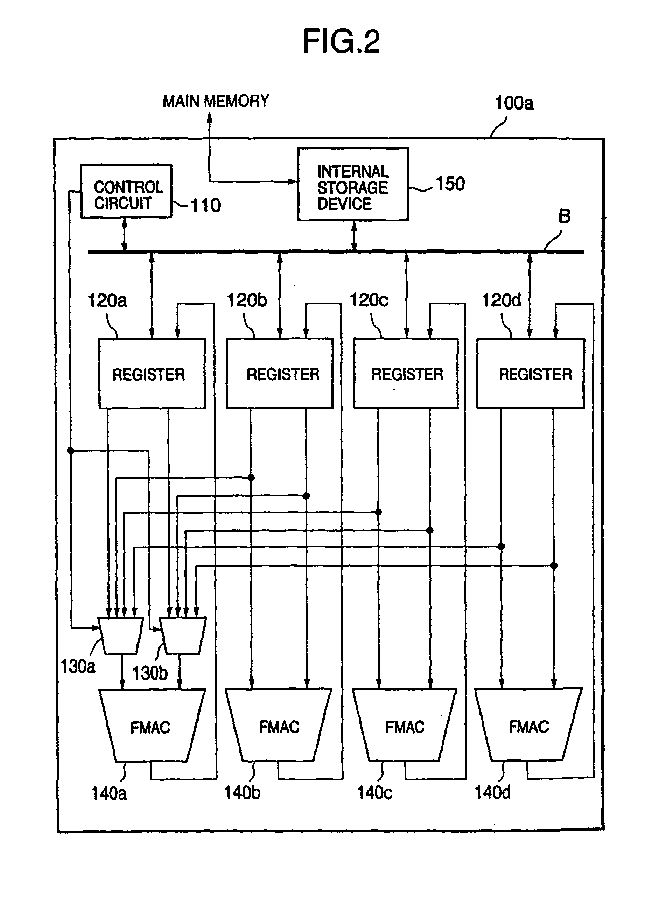

FIG. 2 shows a configuration example of the parallel arithmetic apparatus 100 included in the main CPU 10.

This parallel arithmetic apparatus 100a acquires coordinate values of polygon vertices and data (arithmetical elements) that are necessary for the geometry processing such as a transformation matrix used for matrix operations from the main memory 11 via the main bus B1 and carries out the operations.

The parallel arithmetic apparatus 100a is configured from a control circuit 110, registers 120a to 120d, selectors 130a and 130b, FMACs 140a to 140d as arithmetic units, and an internal storage device 150. The registers 120a to 120d and the internal storage device 150 are connected via the internal bus B.

The registers 120a to 120d each form a pair with the FMACs 140a to 140d, that is, the registers are designed to have a one-to-one correspondence with the FMACs. To allow matrix operations using a $4 \times 4$ transformation matrix and inner product operations of four-dimensional vectors, this embodiment uses four pairs of registers and FMACs, but the number of pairs can be determined according to the processing, as appropriate.

The selectors 130a and 130b are provided between the register 120a and the FMAC 140a.

In this embodiment, the arithmetical elements used for the matrix operations and the inner product operations are given by using floating-point numbers, but it goes without saying that fixed-point numbers can also be used instead. When the arithmetical elements are expressed with the fixed-point numbers, sum-of-products operators for the fixed-point numbers will be used rather than the FMACs 140a to 140d.

The control circuit 110 controls the overall operation of the parallel arithmetic apparatus 100a. For example, the control circuit controls the internal storage device 150, the recording of arithmetical elements in the registers 120a to 120d and the operations of the selectors 130a and 130b.

The registers 120a to 120d take in and record the arithmetical elements assigned to the respective registers from among the arithmetical elements such as component values of a transformation matrix used for operations such as matrix operations or inner product operations, coordinate values of coordinates to be transformed and vector component values from the internal storage device 150 under the control of the control circuit 110.

When an inner product operation of four-dimensional vectors is carried out, the registers take in and record component values assigned to the respective registers as arithmetical elements from among component values of two four-dimensional vectors. For example, of the two four-dimensional vectors (Ax, Ay, Az, Aw) and (Bx, By, Bz, Bw), the register 120a records components values Ax and Bx, the register 120b records components values Ay and By, the register 120c records components values Az and Bz and the register 120d records components values Aw and Bw.

When a matrix operation is carried out using a $4 \times 4$ transformation matrix, the registers take in and record, as arithmetical elements, the coordinate values of the four-dimensional coordinates to be transformed and component values of a row assigned to the respective registers of the transformation matrix. For example, the registers 120a to 120d record component values of the transformation matrix in addition to coordinate values of the four-dimensional coordinates; the register 120a records the component values of the 1st row of the transformation matrix, the register 120b records the component values of the 2nd row of the transformation matrix, the register 120c records the component values of the 3rd row of the transformation matrix and the register 120d records the component values of the 4th row of the transformation matrix as their respective arithmetical elements. The registers 120a to 120d each record a pair of the 1st column component value of each row of the transformation matrix and the 1st component value of the four-dimensional coordinate to be transformed, a pair of the 2nd column component value and the 2nd component value, a pair of the 3rd column component value and the 3rd component value and a pair of the 4th column component value and the 4th component value, and these values are read one pair at a time.

Furthermore, the registers 120a to 120d record calculation results of the FMACs 140a to 120d each forming a pair therewith.

The selectors 130a and 130b select one of the registers 120a to 120d, take in an arithmetical element to be recorded in the selected register and supply it to the FMAC 140a. When an inner product operation is carried out, the selectors select one of the registers 120a to 120d in a round-robin fashion, take in an arithmetical element to be recorded in the selected register and supply it to the FMAC 140a. When a matrix operation is carried out, the selectors always select the register 120a and take in the arithmetical element recorded in the register 120a and supply it to the FMAC 140a.

The selectors 130a and 130b select a register indicated by the control circuit 110 based on the content of an operation carried out at that time and the situation of progress of the operation, etc.

The FMACs 140a to 140d take in two arithmetical elements recorded in the registers 120a to 120d and multiply and add up them.

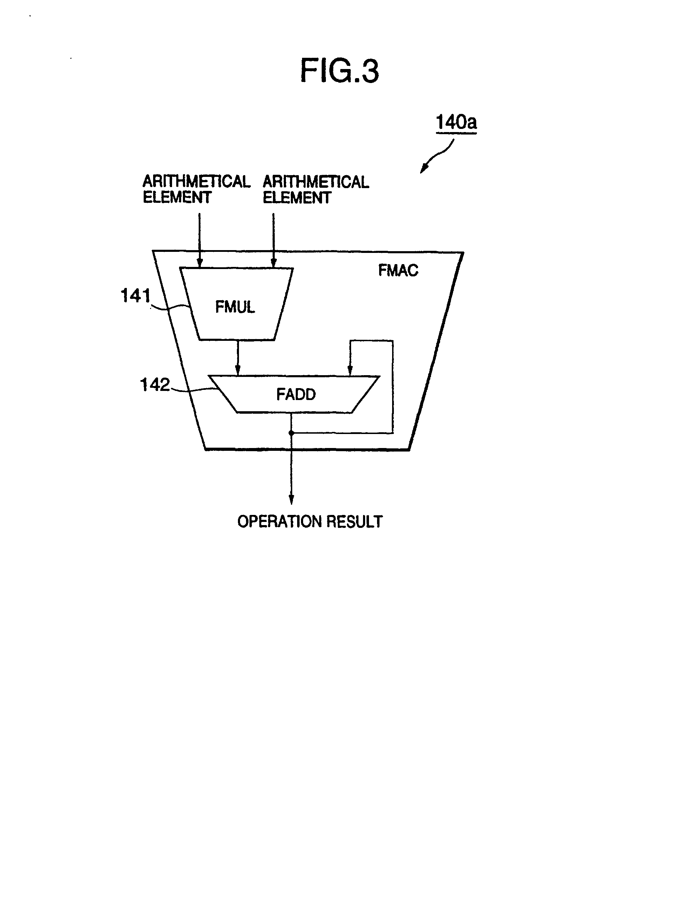

FIG. 3 is an internal block diagram of the FMAC 140a. Since the other FMACs 140b to 140d also have a similar configuration, only the configuration of the FMAC 140a is described here and description of the other FMACs 140b to 140d will be omitted.

In order to multiply and add up the arithmetical elements taken in, a floating-point number multiplier (FMUL: Floating MULtiply) 141 and a floating-point number adder (FADD: Floating ADDer) 142 are provided. The two arithmetical elements that are taken in are multiplied by the FMUL 141 first. The multiplication result is sent to the FADD 142. The FADD 142 adds up the multiplication results sent from the FMUL 141 one by one.

For example, when a0 to an and b0 to bn are taken in one after another as the arithmetical elements, the FMAC 140a obtains the following calculation result:

$$a0 \cdot b0 + a1 \cdot b1 + a2 \cdot b2 + ... + a(n - 1) \cdot b(n - 1) + an \cdot bn$$

The FMACs 140a to 140d supply the calculation results to the registers that form their respective pairs.

Using the selectors 130a and 130b, the FMACs 140a to 140d perform the following operations during the inner product and matrix operations.

When an inner product operation is carried out, the FMAC 140a multiplies the component values of the components of two vectors supplied from the registers 120a to 120d via the selectors 130a and 130b and adds up the multiplication results one by one. The number of times the multiplication and addition are performed may be counted, making the state of the progress of the inner product operation available to prevent the subsequent instruction from starting until the inner product operation is completed.

When a matrix operation is carried out, the FMACs 140a to 140d multiply the component values of the transformation matrix taken in from the corresponding registers 120a to 120d by coordinate values of the four-dimensional coordinates which form pairs and add up the multiplication results one by one.

The internal storage device 150 takes in coordinate values of polygon vertices, component values of the transformation matrix used for the matrix operations, data necessary for the geometry processing of the vector component values from the main memory 11 and records these values under the control of the control circuit 110. Furthermore, the internal storage device 150 takes in and records the calculation results from the registers 120a to 120d. The calculation results are sent to the main memory 11 via the internal storage device 150.

A direct memory access transfer is performed between the internal storage device 150 and the main memory 11, which allows high speed data exchange and is convenient for processing of that requires a large volume of data processing, such as image processing.

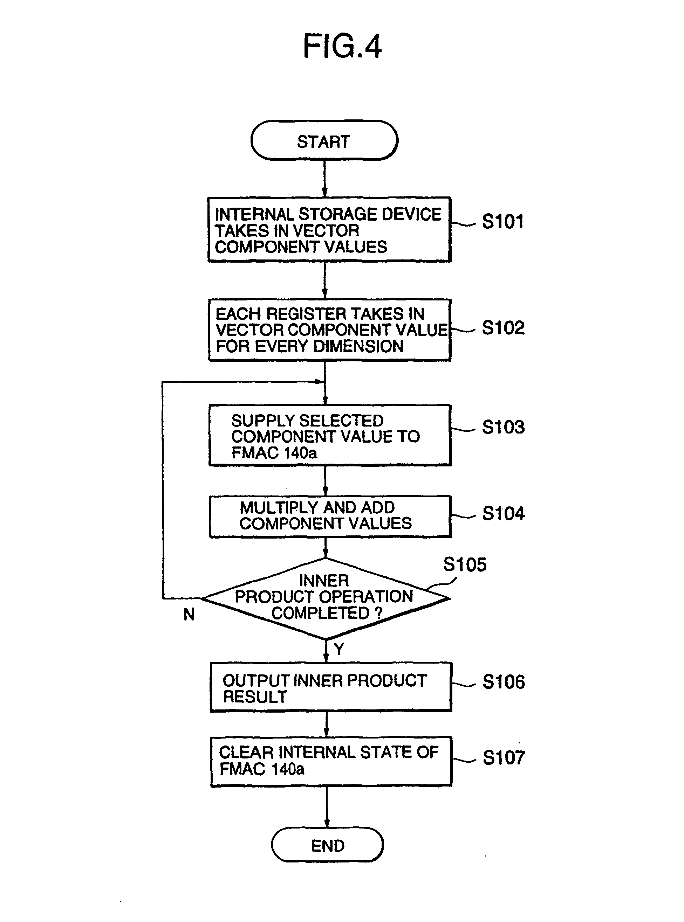

The processing procedure when the parallel arithmetic apparatus 100a carries out the inner product operation in the mathematical expression 2, that is, the inner product operation between the vector A (Ax, Ay, Az, Aw) and the vector B (Bx, By, Bz, Bw) is described. FIG. 4 is a flow chart showing such a processing procedure.

The parallel arithmetic apparatus 100a takes in the component values of the vector A (Ax, Ay, Az, Aw) and the vector B (Bx, By, Bz, Bw) stored in the main memory 11 through the direct memory access transfer and records the component values in the internal storage device 150 (step S101).

The registers 120a to 120d take in the component values assigned to the respective registers from among the component values of the vector A (Ax, Ay, Az, Aw) and the vector B (Bx, By, Bz, Bw) stored in the internal storage device 150. That is, the register 120a takes in Ax and Bx, the register 120b takes in Ay and By, the register 120c takes in Az and Bz and the register 120d takes in Aw and Bw (step S102).

The selectors 130a and 130b select one of the registers 120a to 120d, take in the component values of the vector A and the vector B to be recorded in the selected register and supply them to the FMAC 140a. The control circuit 110 determines which of the registers 120a to 120d should be selected according to the state of the progress of the inner product operation. The selectors 130a and 130b select one of the registers 120a to 120d under the control of the control circuit 110. Here, the selectors first select the register 120a, take in Ax and Bx and supply them to the FMAC 140a (step S103). The FMAC 140a performs a sum-of-products operation between Ax and Bx using the FMUL 141 and the FADD 142 (step S104). Before the first sum-of-products operation is carried out, the internal state of the FMAC 140a is cleared.

After the sum-of-products operation, the FMAC 140a determines whether the inner product operation has been completed or not (step S105). Whether the inner product operation has been completed or not can be determined by understanding the number of the component values of the vectors subjected to the inner product operation. The number of times the sum-of products operations are performed is counted and it is when the count value becomes equal to the number of the component values of the received vectors that it is determined that the inner product operation has been completed. This makes it possible to find out from the count value the register from which the subsequent component value should be extracted. The result of the determination as to whether the inner product operation has been completed or not is sent to the control circuit 110.

In this case, the inner product operation has not been completed yet (step S105: N), and therefore the control circuit 110 allows the selectors 130a and130b to select the register 120b. The selectors 130a and130b select the register 120b under the control of the control circuit 110, take in Ay and By and supply them to the FMAC 140a. When the FMAC 140a takes in Ay and By, the FMUL 141 and the FADD 142 perform a sum-of-products operation to obtain Ax•Bx + Ay•By. Likewise, the steps S103 to S105 are repeated until the inner product operations are completed to obtain Ax•Bx + Ay•By + Az•Bz + Aw•Bw.

Upon determining that the inner product operations have been completed (step S105: Y), the FMAC 140a supplies the calculation result to the register 120a (step S106). After the output, the FMAC 140a clears the internal state (step S107). The output calculation result is supplied from the register 120a to the internal storage device 150 and sent to the main memory 11.

This completes the inner product operations.

Tthe selectors 130a and 130b allows calculations between the component values of different components, making it easier to carry out inner product operations. The selectors 130a and 130b are provided between the register 120a and the FMAC 140a, which is not intended to be restrictive. The selectors may also be provided between the register 120b and the FMAC 140b, between the register 120c and the FMAC 140c or between the register 120d and the FMAC 140d.

When a matrix operation is performed, the selectors 130a and 130b always select the register 120a, only supply the arithmetical element recorded in the register 120a to the FMAC 140a and never supply the arithmetical elements recorded in the other registers 120b to d to the FMAC 140a. The arithmetical elements recorded in the registers 120b to 120d are taken into the FMACs 140b to 140d with which the FMACs 140b to 140d form their respective pairs and processed.

For example, when the matrix operation in the mathematical expression 1 is carried out, the register 120a records the component values (M11, M12, M13, M14) of the 1st row of the transformation matrix and the coordinate values (Vx, Vy, Vz, Vw) of the four-dimensional coordinates. The register 120b records the component values (M21, M22, M23, M24) of the 2nd row of the transformation matrix and the coordinate values (Vx, Vy, Vz, Vw) of the four-dimensional coordinates. The register 120c records the component values (M31, M32, M33, M34) of the 3rd row of the transformation matrix and the coordinate values (Vx, Vy, Vz, Vw) of the four-dimensional coordinates. The register 120d records the component values (M41, M42, M43, M44) of the 4th row of the transformation matrix and the coordinate values (Vx, Vy, Vz, Vw) of the four-dimensional coordinates.

The FMACs 140a to 140d sequentially take in the component values and the coordinate values recorded in the registers 120a to 120d with which the FMACs form their respective pairs and carry out operations. Suppose the FMAC 140a is taken as an example, the FMAC 140a takes in M11 and Vx from the register 120a via the selectors 130a and 130b and calculates M11•Vx using the FMUL 141. They sends this to the FADD 142. Then, they takes in M12 and Vy and calculates M12•Vy, sends this to the FADD 142 and calculates M11•Vx + M12•Vy. Then, They carries out the same calculation on M13 and Vz, and M14 and Vw and calculates M11•Vx + M12•Vy + M13•Vz + M14•Vw. The other FMACs 140b to 140d carry out the same operations. Thus, the FMACs 140a to 140d carry out operations in parallel executing thereby $4 \times 4$ matrix operations at the same speed as the conventional art.

As described above, the parallel arithmetic apparatus 100a is an apparatus that selectively carries out the matrix operations and the vector inner product operations. The parallel arithmetic apparatus is provided with at least the registers 120a to 120d that record the component values of a transformation matrix as the arithmetical elements during the matrix operation and record the vector component values as arithmetical elements during the inner product operation, the FMACs 140a to 140d that take in the arithmetical elements recorded in the registers 120a to 120d and carry out sum-of-products operations, the selectors 130a and 130b that select one register from the registers 120a to 120d and supply the arithmetical elements registered in the selected register to the FMAC 140a. The registers 120b to 120d form a one-to-one correspondence with the FMACs 140b to 140d. The selectors 130a and 130b supply the component values of the transformation matrix recorded in the register 120a to the FMAC 140a during the matrix operation and select the registers 120a to 120d one by one in a round-robin fashion and supply the vector component value recorded in the selected register to the FMAC 140a during the inner product operation.

As apparent from the above, the selectors 130a and 130b make it possible to carry out the matrix operation and the inner product operation selectively.

<Embodiment 2>

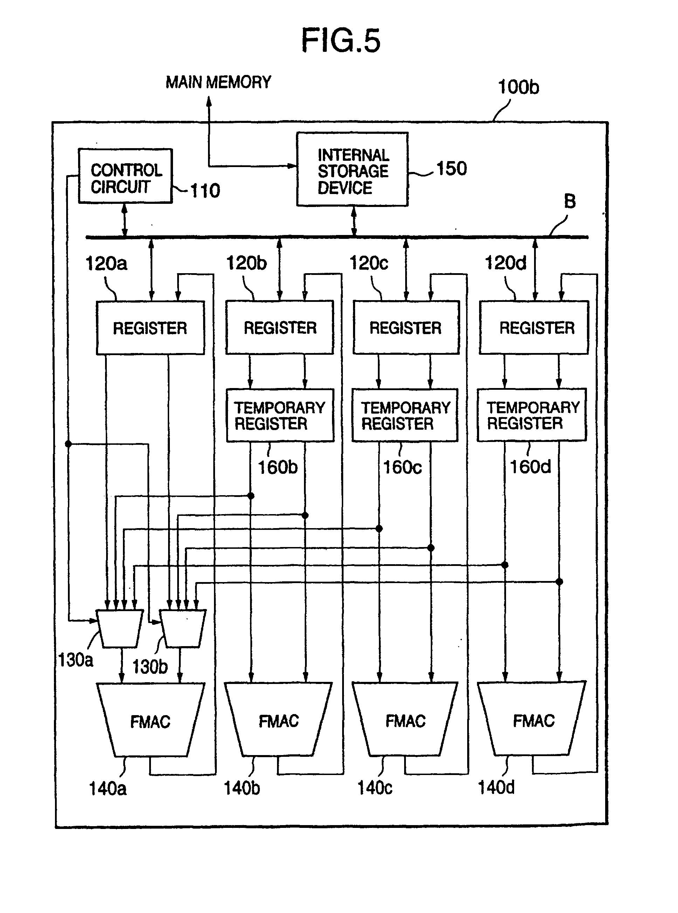

FIG. 5 is a block diagram of a parallel arithmetic apparatus 100b according to another embodiment.

Compared to the parallel arithmetic apparatus 100a shown in FIG. 2, the parallel arithmetic apparatus 100b is only different in that temporary registers 160b to 160d are provided at the output ends of the registers 120b to 120d.

This parallel arithmetic apparatus 100b is configured with registers 120a to 120d that record arithmetical elements, and the FMACs 140a to 140d that carry out sum-of-products operations based on the arithmetical elements recorded in these registers 120a to 120d. Selectors 130a and 130b are inserted between the register 120a and the FMAC 140a and the temporary registers 160b to 160d are inserted between the registers 120b to 120d and the FMAC 140b to 140d. The selectors 130a and 130b select one from among the register 120a and the temporary registers 160b to 160d and supplies the arithmetical element recorded in the selected register 120a or temporary register 160b to 160d to the FMAC 140a. Operations of these components are controlled by the control circuit 110.

The temporary registers 160b to 160d have a one-to-one correspondence with the registers 120b to 120d. The temporary registers 160b to 160d temporarily store the arithmetical elements recorded in their respective registers 120b to 120d when these are sent to the FMAC 140b to 140d or the selectors 130a and 130b.

Since the temporary registers 160b to 160d temporarily record the arithmetical elements from the registers 120b to 120d, even if the arithmetical elements are not taken from the registers 120b to 120d into the FMAC 140a at the same timing as in the case of the inner product operation, the read ports of the registers 120b to 120d are not occupied by the arithmetical elements for inner product operations. Thus, while the FMAC 140a is carrying out a matrix operation, the other FMAC 140b to d can take in the subsequent arithmetical elements from the registers 120b to 120d, allowing a sum-of-products operation.

In the above-described embodiments, the entertainment apparatus using the parallel arithmetic apparatus 100 is described as an example, which is not restrictive. The parallel arithmetic apparatus of the present invention may use any information processor which carries out parallel arithmetic processing and carries out at least matrix operations and vector inner product operations. Moreover, the number of pairs of the registers and the sum-of-product operators (FMAC) is not limited to 4. The number of pairs may be determined according to the processing carried out by the relevant apparatus.

Furthermore, the parallel arithmetic apparatus 100 can also be implemented by rendering a computer to execute the computer program of the present invention. This embodiment forms functional blocks corresponding to the selectors 130a and 130b on the computer with a plurality of FMACs through a co-operation between the computer program recorded in a computer-accessible recording medium such as a disk device or semiconductor memory and a control program (OS, etc.) incorporated in the computer.

As described above, the present invention can perform the vector inner product operations easily while performing the matrix operations as efficiently as the conventional arts.

**Claims**

**1.** A parallel arithmetic apparatus comprising multiple pairs of recording means for recording arithmetical elements to be operated and operating means for performing sum-of-products operations based on the arithmetical elements recorded in said recording means, wherein
one of said recording means of all pairs is selected and selecting means for supplying said arithmetical elements recorded in the selected recording means to the operating means of said pair is inserted between the recording means and operating means of any one pair.

**2.** The parallel arithmetic apparatus according to claim 1, wherein temporary recording means for temporarily recording said arithmetical elements recorded in the recording means of a pair in which said selecting means is not inserted is inserted between the recording means and operating means of said pair, and

said selecting means is constructed in such a way as to supply the arithmetical elements recorded in said temporary recording means to said operating means when the recording means of the pair in which said selecting means is not inserted is selected.

3. The parallel arithmetic apparatus according to claim 1, wherein said recording means of all pairs record, during a matrix operation, a first arithmetical element to be subjected to said matrix operation, and during a vector inner product operation, a second arithmetical element to be subjected to said inner product operation,

said selecting means is constructed, during said matrix operation, in such a way as to input said first arithmetical element from the recording means of the own pair to the operating means of the own pair and, during said inner product operation, in such a way as to select said recording means of all pairs one by one in a round-robin fashion and supply said second arithmetical element from the selected recording means to the operating means of the own pair.

4. The parallel arithmetic apparatus according to claim 1, wherein each of said operating means performs an operation with a content independently assigned to said pair using said arithmetical elements recorded in the recording means of said pair.

5. The parallel arithmetic apparatus according to claim 4, wherein said operation is an operation associated with any one of four-dimensional coordinate components.

6. A parallel arithmetic apparatus that selectively performs a matrix operation and vector inner product operation, comprising:

a plurality of recording means for recording, during said matrix operation, a first arithmetical element to be subjected to said matrix operation and recording, during said inner product operation, a second arithmetical element to be subjected to said inner product operation;
a plurality of operating means forming a one-to-one correspondence with said plurality of recording means for performing, during said matrix operation, a sum-of-products operation by each operating means receiving said first arithmetical element recorded in the corresponding recording means, and performing, during said inner product operation, a sum-of-products operation by predetermined one of the operating means receiving said second arithmetical element recorded in all the recording means; and
selecting means for selecting, during said matrix operation, the recording means corresponding to said predetermined operating means and supplying a first arithmetical element recorded in this recording means to said predetermined operating means, and selecting, during said inner product operation, said plurality of recording means one by one in a round-robin fashion and supplying a second arithmetical element recorded in the selected recording means to said predetermined operating means.

7. The parallel arithmetic apparatus according to claim 6, wherein said arithmetical element is expressed with a floating point number and said operating means is constructed so as to perform a sum-of products operation of the floating point number.

8. An entertainment apparatus that performs image processing on an entertainment image by performing a matrix operation with regard to coordinates expressing a position and a shape of an object and performing an inner product operation with regard to vectors used to express an image of said object, comprising:

a plurality of registers that records, during said matrix operation, a first arithmetical element subjected to said matrix operation and records, during said inner product operation, a second arithmetical element subjected to said inner product operation;
a plurality of sum-of-products operators forming a one-to-one correspondence with said plurality of registers that performs, during said matrix operation, a sum-of-products operation by each sum-of-products operator receiving said first arithmetical element recorded in the corresponding register, and performs, during said inner product operation, a sum-of-products operation by predetermined one of the sum-of-products operators receiving said second arithmetical element recorded in all registers; and
a selector that selects, during said matrix operation, a register corresponding to said predetermined sum-of-products operator and supplies a first arithmetical element recorded in this register to said predetermined sum-of-products operator, and selects, during said inner product operation, said plurality of registers one by one in a round-robin fashion and supplies a second arithmetical element recorded in the selected register to said predetermined sum-of-products operator.

9. An entertainment apparatus that performs image processing on an entertainment image by carrying out a matrix operation between a matrix and coordinate values to perform a coordinate transformation of coordinates expressing the position and a shape of an object and carrying out an inner product operation between a normal vector oriented in the normal direction of the surface of said object and position vector of a light source to determine the display mode of the surface of said object, comprising:

a plurality of registers that records said coordinate values and component values corresponding to any one row of said matrix during said matrix operation and records said normal vector and component values corresponding to any one component of said position vector during said inner product operation;

sum-of-products operators forming a one-to-one correspondence with said plurality of registers that carry out a sum-of-products operation during said matrix operation by each sum-of-products operator receiving said coordinate values recorded in the corresponding register and component values corresponding to said one row of said matrix, and carry out a sum-of-products operation during said inner product operation by predetermined one of the sum-of-products operators receiving said normal vector recorded in all registers and component values of said position vector;

a selector that selects, during said matrix operation, a register corresponding to said predetermined sum-of-products operator and supplies said coordinate value recorded in this register and component values corresponding to said one row of said matrix to said predetermined sum-of-products operator, and selects, during said inner product operation, said plurality of registers one by one in a round-robin fashion and supplies component values of said normal vector and said position vector recorded in the selected register in said predetermined sum-of-product operator.

10. A processing method that allows a matrix operation and vector inner product operation to be selectively executed and is executed by an apparatus provided with a plurality of operating means, comprising the steps of:

supplying, during said matrix operation, arithmetical elements subjected to said matrix operation by assigning the arithmetical elements to said plurality of operating means based on the features thereof to carry out a sum-of-products operation based on the assigned arithmetical elements; and

supplying, during said inner product operation, arithmetical elements subjected to said inner product operation in one predetermined operating means to allow said operating means to carry out a sum-of-products operation based on the arithmetical elements.

11. A computer program that that makes it possible to selectively execute a matrix operation and vector inner product operation and renders a computer provided with a plurality of operating means to execute:

a step of supplying, during said matrix operation, arithmetical elements subjected to said matrix operation by assigning the arithmetical elements to said plurality of operating means based on the features thereof to carry out a sum-of-products operation based on the assigned arithmetical elements; and

a step of supplying, during said inner product operation, arithmetical elements subjected to said inner product operation in one predetermined operating means to allow said operating means to carry out a sum-of-products operation based on the arithmetical elements.

12. A semiconductor device that makes it possible to selectively execute a matrix operation and vector inner product operation and is built in an apparatus incorporating a computer provided with a plurality of operating means, rendering said apparatus to execute:

a step of supplying, during said matrix operation, arithmetical elements subjected to said matrix operation by assigning the arithmetical elements to said plurality of operating means based on the features thereof to allow each operating means to carry out a sum-of-products operation based on the assigned arithmetical elements; and

a step of supplying, during said inner product operation, arithmetical elements subjected to said inner product operation in one predetermined operating means to allow said operating means to carry out a sum-of-products operation based on the arithmetical elements.

# FIG.1

# FIG.2

MAIN MEMORY

100a

CONTROL CIRCUIT ～110

INTERNAL STORAGE DEVICE ～150

B

120a

120b

120c

120d

REGISTER

REGISTER

REGISTER

REGISTER

130a    130b

FMAC

FMAC

FMAC

FMAC

140a

140b

140c

140d

# FIG.3

# FIG.4

```
                    ┌──────────┐
                    │  START   │
                    └────┬─────┘
                         │
                         ▼
        ┌──────────────────────────────┐
        │ INTERNAL STORAGE DEVICE      │── S101
        │ TAKES IN VECTOR              │
        │ COMPONENT VALUES             │
        └──────────────┬───────────────┘
                       │
                       ▼
        ┌──────────────────────────────┐
        │ EACH REGISTER TAKES IN       │── S102
        │ VECTOR COMPONENT VALUE       │
        │ FOR EVERY DIMENSION          │
        └──────────────┬───────────────┘
                       │
                       ▼
        ┌──────────────────────────────┐
        │ SUPPLY SELECTED              │── S103
        │ COMPONENT VALUE TO           │
        │ FMAC 140a                    │
        └──────────────┬───────────────┘
                       │
                       ▼
        ┌──────────────────────────────┐
        │ MULTIPLY AND ADD             │── S104
        │ COMPONENT VALUES             │
        └──────────────┬───────────────┘
                       │
                       ▼
               ╱────────────────╲        S105
              ╱     INNER        ╲
        N    ╱  PRODUCT OPERATION ╲
       ◄─────╲   COMPLETED ?      ╱
              ╲                  ╱
               ╲────────────────╱
                       │ Y
                       ▼
        ┌──────────────────────────────┐
        │ OUTPUT INNER PRODUCT         │── S106
        │ RESULT                       │
        └──────────────┬───────────────┘
                       │
                       ▼
        ┌──────────────────────────────┐
        │ CLEAR INTERNAL STATE OF      │── S107
        │ FMAC 140a                    │
        └──────────────┬───────────────┘
                       │
                       ▼
                 ┌──────────┐
                 │   END    │
                 └──────────┘
```

# FIG.5

MAIN MEMORY

100b

CONTROL CIRCUIT ~110

INTERNAL STORAGE DEVICE ~150

B

120a    120b    120c    120d

REGISTER    REGISTER    REGISTER    REGISTER

TEMPORARY REGISTER    TEMPORARY REGISTER    TEMPORARY REGISTER

160b    160c    160d

130a    130b

FMAC    FMAC    FMAC    FMAC

140a    140b    140c    140d

## INTERNATIONAL SEARCH REPORT

| | International application No. |
|---|---|
| | PCT/JP01/09616 |

**A. CLASSIFICATION OF SUBJECT MATTER**
Int.Cl⁷   G06F17/16
          G06T15/00
          G06T 1/20
According to International Patent Classification (IPC) or to both national classification and IPC

**B. FIELDS SEARCHED**

Minimum documentation searched (classification system followed by classification symbols)
Int.Cl⁷   G06F17/10-17/18  G06T 1/00- 1/40  G06T3/00-5/50
          G06T 9/00- 9/40  G06T11/00-11/40
          G06T15/00-15/60  G06T17/00-17/30

Documentation searched other than minimum documentation to the extent that such documents are included in the fields searched
Jitsuyo Shinan Koho          1922-1996     Toroku Jitsuyo Shinan Koho  1994-2002
Kokai Jitsuyo Shinan Koho    1971-2002     Jitsuyo Shinan Toroku Koho  1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 7-141325 A (Oki Electric Industry Co., Ltd.),<br>02 June, 1995 (02.06.1995)   (Family: none) | 1,4,5<br>2 |
| X<br>Y | JP 58-207177 A (NEC Corporation),<br>02 December, 1983 (02.12.1983)   (Family: none) | 1,4,5<br>2 |
| Y | EP 952516 A2 (NEC CORPORATION),<br>27 October, 1999 (27.10.1999)<br>& JP 11-306163 A | 2 |
| A | US 6005590 A (Mitsubishi Denki Kabushiki Kaisha),<br>21 December, 1999 (21.12.1999)<br>& JP 9-265543 A | 1-12 |
| A | US 5943057 A (Sony Corporation),<br>24 August, 1999 (24.08.1999)<br>& JP 9-35084 A | 1-12 |
| A | KUNIMATSU Atsushi et al.,<br>VECTOR UNIT ARCHITECTURE FOR EMOTION SYNTHESIS, IEEE Micro,<br>March-April 2000, Volume:20, Issue:2, pages:40-47 | 1-12 |

☒  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 January, 2002 (29.01.02) | Date of mailing of the international search report<br>12 February, 2002 (12.02.02) |
|---|---|
| Name and mailing address of the ISA/<br>Japanese Patent Office | Authorized officer |
| Facsimile No. | Telephone No. |

Form PCT/ISA/210 (second sheet) (July 1992)

EP 1 335 299 A1

**INTERNATIONAL SEARCH REPORT**

International application No.

PCT/JP01/09616

C (Continuation).   DOCUMENTS CONSIDERED TO BE RELEVANT

| Category* | Citation of document, with indication, where appropriate, of the relevant passages | Relevant to claim No. |
|---|---|---|
| A | ARAKAWA Fumio et al., SH4 RISC MULTIMEDIA MICROPROCESSOR, IEEE Micro, March-April 1998, Volume:18, Issue:2, pages:26-34 | 1-12 |
| A | SAGISHIMA Noriyuki et al., Heiretsu Zukei Shori, 1$^{st}$ edition, Tokyo, Corona Publishing co., Ltd., 15 August, 1991, pages 196-201, pages 204-206 | 1-12 |

Form PCT/ISA/210 (continuation of second sheet) (July 1992)